# EUROPÄISCHE PATENTANMELDUNG

(11) **EP 0 729 925 A1**
(43) Veröffentlichungstag der Anmeldung: **04.09.1996**
(21) Anmeldenummer: 95810129.7
(22) Anmeldetag: 01.03.1995
(51) Int. Cl.: C04B 28/10

(54) **Mineralischer Aufbaumörtel und seine Verwendung für Sandstein-Restaurierungen**

(71) Anmelder: Büchi-Meyer, Rolf, CH-4900 Langenthal (CH)
(72) Erfinder: Büchi-Meyer, Rolf, CH-4900 Langenthal (CH)
(74) Vertreter: BOVARD AG - Patentanwälte

(57) **Zusammenfassung**

Die Mörtelzusammensetzung, welche insbesondere für die Reparatur von Sandstein an Bauwerken nützlich ist, besteht aus
Komponente A enthaltend ein festes Gemenge aus
- Calciumhydroxid als Bindemittel
- Sand mit einer Korngrösse im Bereich von 0.08 - 0.25 mm und aus
Komponente B bestehend aus
- wässeriger Polyacrylatdispersion oder -lösung mit einem Acrylatgehalt im Bereich von 3 bis 10 Gew.%.

Die Zusammensetzung erlaubt eine fachgerechte Restauration. Ohne Gehalt an Zement, Trass oder andern aggressiven Bestandteilen lässt sich der aus den Komponenten A und B erhältliche Mörtel nicht nur sehr einfach auftragen und formen, sondern er erlaubt sogar eine Nachbearbeitung durch einen Steinmetz. Es können Zusammensetzungen verschiedener Farbtöne hergestellt und in den Handel gebracht werden, deren Mischung eine Anpassung an jeden natürlichen Sandstein erlaubt. Der erhaltene rekonstituierte Sandstein entspricht in seinem Aussehen und Alterungsverhalten weitgehend natürlichem Sandstein. Somit können die zentralen Anliegen der Denkmalpflege die Substanz- und Werterhaltung erfüllt werden.

## Beschreibung

Die Erfindung betrifft eine mineralische Aufbaumörtelzusammensetzung ohne Zement und Trass und ihre Verwendung zur Durchführung von fachgerechten Sandstein-Restaurierungen.

Die Pflege und Erhaltung des Sandsteins erscheint vielen Fachleuten als problematische und komplexe Aufgabe. Einerseits möchte man so viel als möglich alte Bausubstanz erhalten und andererseits sollte sich das Restaurierungsmaterial nachher auch im langjährigen Abbau dem Sandstein anpassen.

Bekannte Mörtelzusammensetzungen, die zu Reparatur von Sandstein zum Einsatz gelangen, enthalten aggressive Komponenten, wie Zement oder Trass, die nachteilige Eigenschaften besitzen. Diese Zusammensetzungen haben auch den Nachteil, dass sich ihre Abbaugeschwindigkeiten im erhärteten Zustand von denjenigen des Natursandsteins unterscheiden, was bei der Alterung der reparierten Stellen auf ästhetisch unbefriedigende Weise zum Ausdruck kommt.

Der vorliegenden Erfindung liegt daher die Aufgabe zugrunde, eine mineralische Aufbaumörtelzusammensetzung zur Verfügung zustellen, welche frei von den obigen Nachteilen ist. Ein weiteres Ziel der Erfindung besteht darin ein Material bereitzustellen, das leicht aufgetragen und nach dem Erhärten in gleicher Weise wie der reparierte Sandstein zu bearbeiten ist.

Gegenstand der vorliegenden Erfindung ist demzufolge die im Patentanspruch 1 definierte Mörtelzusammensetzung und das im Patentanspruch 11 definierte Verfahren zur Repartur eines Bauwerkes unter Verwendung der erfindungsgemässen Mörtelzusammensetzung.

Die als Sandsteinersatz dienende Mörtelzusammensetzung gemäss der Erfindung besteht aus einer Basiszusammensetzung, die Ca(OH)₂ (hydraulischer Kalk, gelöschter Kalk) als Bindemittel, eine oder mehrere Sandsorten in naturgetreuer Sieblinie, von 0,08 - 0,25 mm und gegebenenfalls andere Zuschlagstoffe oder Pigmente enthält, und aus einer Anmachflüssigkeit, die Wasser und 3 - 10 Gew.% Acrylharz (z.B. Acronal S 702 ® (BASF) oder Blextol 500 ® (Röhm GmbH, Darmstadt DE)) enthält. Die Acrylkomponente dient als Stabilisator, da der Kalkmörtel allein sonst bei der Verarbeitung zu rasch austrocknen würde. Da diese Anmachflüssigkeit, die in Form einer Lösung oder Suspension vorliegt, nach der Verarbeitung des Mörtels zu ca. 95% verdunstet, ist das gefestigte Mörtelprodukt im wesentlichen frei von aggressiven Bestandteilen.

Die gebrauchsfertige Mörtelzusammensetzung wird im Arbeitsprozess, vor ihrer Verarbeitung fortlaufend gemischt. Die Durchführung des Arbeitsvorganges beginnt mit der Säuberung des trockenen Sandsteines von allen schadhaften Teilen. An den gesäuberten Flickstellen wird dünnflüssiger Aufbaumörtel (d.h. Mörtel mit einem hohen Flüssigkeitsanteil) angestrichen, so dass ein Teil der flüssigen Komponente wie eine Vorhut in die Kapillaren gesogen wird. Das ist die Haftbrücke oder der Haftgrund. Danach wird der in einer steifen Konsistenz hergestellte mineralische Aufbaumörtel aufgetragen. Dieser kann innerhalb von ca. dreissig Minuten mit einer Schablone gezogen oder sonst geformt werden. Er kann auch geschalt, gegossen oder gepresst werden. Eine freie Auftragung kann ohne mechanische Verankerung ( Eisen etc. ) mit einer Schichtdicke von bis zu 30 mm pro Tag erfolgen. Für optimale Ergebnisse empfiehlt es sich jedoch pro Auftrag eine Schichtdicke von 20 - 25 mm nicht zu überschreiten.

Eine neue Auftragung kann dann ohne neue Haftbrücke erfolgen. Bei Mehrauftrag muss eine Schalung erstellt werden und die Abbindezeit dauert länger. Die Schalung muss mit einem Entschalungsmittel vorbehandelt werden. Kleine Flickstellen können auf Null auslaufend gestrichen werden. Es sollte auf trockenem Untergrund gearbeitet werden und die Temperatur sollte nicht unter 5 °C sein. Am erhärteten Steinersatz kann die Nachbearbeitung durch einen Steinmetz erfolgen, z.B. durch Steinmetzwerkzeuge; Schleifmaschinen, Schleifpapier, Carborundum. Sandproben des zu restaurierenden Sandsteines sind nicht erforderlich, da das durch den mineralischen Aufbaumörtel aufgebaute Material keine Spannung aufweist. Es ist formstabil, frostbeständig und frosttausalzbeständig.

Die Alterung der Flickstellen erfolgt im gleichen Abbautempo, wie der Sandstein selbst. Im Endresultat entsprechen die Bearbeitungsmöglichkeiten, die Festigkeit und die Wasseraufnahme, die Struktur und der Sättigungswert den Eigenschaften des natürlichen Sandsteines. Der Diffusionswiderstand ist günstiger als beim Sandstein. Da der mineralische Aufbaumörtel in verschiedenen Farbtönen, die untereinander mischbar sind und aus Naturpigmenten bestehen, hergestellt werden kann, ist es möglich, die Farbgebung jedem natürlichen Sandstein anzupassen.

Das erhärtete aus einer erfindungsgemässen Mörtelzusammensetzung gemäss dem nachstehenden Beispiel hergestellte Produkt besitzt folgende Eigenschaften:

| | | |
|---|---|---|
| - Biegefestigkeit: | 2,1 N/mm² | |
| - E-Modul: | 1,2 KN/mm² | |
| - Längenänderungskoeffizient: | α = 7,0 x 10⁻⁶mm°K | |
| - Haftzugfestigkeit: | 2,0 N/mm² | |
| - Druckfestigkeit: | 4,1 N/mm² | |
| - Frostbeständigkeit: | Widerstandsfaktor | WF-L = 85% |
| - Frosttausalzbeständigkeit: | | WFT-L = 88% |
| - Dampfwiderstand: | Sd = 0,213 m | |
| - Diffusionswiderstandszahl: | µ = 17 (günstiger als Sandstein) | |

Das nachstehende Beispiel dienen zur Erläuterung der vorliegenden Erfindung. Durch die dargelegte Rezeptur ist keine Einschränkung beabsichtigt. Sofern nicht anders angegeben, beziehen sich die %-Angaben auf das Gewicht

### Beispiel: mineralische Basismörtelzusammensetzung

Die mineralische Mörtelzusammensetzungen kann in beliebigen Farbtönen hergestellt werden, die nachstehende Rezeptur enthält hierzu ein Pigment. Es können jedoch je nach der gewünschten Farbe auch andere Farbstoffe oder Pigmente oder auch Mischungen verwendet werden. Die Basismörtelzusammensetzung ist ein Gemenge von festen Bestandteilen, das vor der Anwendung mit einer flüssige Acrylkomponente vermischt wird. Die flüssige Acrylkomponente ist eine 5 % wässerige Lösung, die unter dem Handelsnamen Blextol 500 ® (Röhm GmbH, Darmstadt DE) erhältlich ist.

### Basismörtelzusammensetzung

- 75,0 %: Quarzsand: 0.08-0,25
Typ RIGK 1087
- 11.2 %: Hydr. Kalk Vigier
- 10.1 %: Marmor Calcit 60/10
- 3.0 %: Quarzmehl: Pig Poyer
- 0,7%: Bayferrox Gelb 415 (Pigment)

Das angegebene Pigment kann weggelassen oder durch andere Pigmente oder Farbstoffe ersetzt werden. Ihr Anteil kann ebenfalls der gewünschten Farbe angepasst werden Beispiele derartiger Pigmente sind: Chromoxidgrün GN, Bayferrox Rot 110, Bayferrox Rot 180 M, Bayferrox Braun 663, Bayferrox Schwarz 318, Lichtblau 100 oder Pre Tio 2x rutil.

Für eine erfolgreiche, fachgerechte Restauration von Sandstein unter Verwendung der erfindungsgemässen Mörtelzusammensetzung wird vorzugsweise wie folgt vorgegangen:

### Anwendungsbeispiel

a) Beim zu reparierenden Sandstein werden von allen schadhaften Partien loses oder bröckeliges Material sowie Verunreinigungen entfernt.
b) Mit dem Gemenge der festen Komponente des Mörtels und der Acrylatsuspension bzw. Lösung wird eine Mörtelmischung mit einer streichfähigen Konsistenz als Haftbrücke erstellt und alle Kontaktstellen vorgestrichen. Diese lässt man unter Bildung eines Haftgrundes trocknen.
c) Nun werden die gleichen Komponenten, jedoch mit einer verminderten Flüssigkeitszugabe zu einer Mischung mit einer möglichst steifen Konsistenz gemischt. Diese kann nun innerhalb von ca. 30 Minuten verarbeitet werden. Pro Auftrag kann Schichtstärke max. 30 mm ohne Verankerung oder Schalung aufgetragen werden. Weitere Schichten können ohne Voranstrich einfach nach Erhärten der vorangegangenen aufgetragen werden. Eine Nachbearbeitung kann in der Regel nach 24 Stunden erfolgen.

Die erfindungsgemässe Mörtelzusamensetzung besteht einerseits aus einem Gemenge fester Bestandteile, welches das Kalkbindemittel und die Zuschlagstoffe enthält und andererseits aus einer wässerigen Lösung oder Suspension welche einen Polyacryatgehalt aufweist. Je nach der gewünschten Konsistenz des Mörtels kann mehr oder weniger der flüssigen Komponente zugegeben werden.

Die erfindungsgemässe Mörtelzusammensetzung kann beispielsweise zur Reparatur oder Restaurierung folgender Teile von Bauwerken bzw. Gebieten verwendet werden:
- Sandsteintreppen
- Sandsteinböden
- Sandsteinsockel
- Sandsteinkreuzblöcke
- Sandsteintüreingänge
- Sandsteinfassaden
- Sandsteinprofile + -figuren
- Kalksteinreparaturen
- Natursteine
- Kunststeine
- Betonsanierungen
- Betonröhren

Alternativ kann die erfindungsgemässe Zusammensetzung auch für die Replikation von Ornamenten, Skulpturen und dergleichen verwendet werden, wobei beständige und originalgetreue Kopien erhalten werden.

## Patentansprüche

1. Mörtelzusammensetzung insbesondere für die Reparatur von Sandstein an Bauwerken, gekennzeichnet durch
Komponente A enthaltend ein festes Gemenge aus
- Calciumhydroxid als Bindemittel
- Sand mit einer Korngrösse im Bereich von 0.08 - 0.25 mm
Komponente B bestehend aus
- wässeriger Polyacrylatdispersion oder -lösung mit einem Acrylatgehalt im Bereich von 3 bis 10 Gew.%,
wobei die Zusammensetzung frei von Zement oder Trass ist.

2. Mörtelzusammensetzung gemäss Anspruch 1, dadurch gekennzeichnet, dass der Sand derart ausgewählt ist, dass seine natürliche Farbe der Farbe des zu reparierenden Materials entspricht.

3. Mörtelzusammensetzung gemäss Anspruch 1 oder 2, dadurch gekennzeichnet, dass die Komponente A zusätzlich natürliche oder synthetische Farbpigmente, z.B. Eisenoxid-, Chromoxid- oder Titanoxidpigmente enthält.

4. Mörtelzusammensetzung nach einem der Ansprüche 1 bis 3, dadurch gekennzeichnet, dass die Komponente A Quarzsand oder Marmorsand enthält.

5. Mörtelzusammensetzung nach einem der Ansprüche 1 bis 4, dadurch gekennzeichnet, dass der Sand mit einer Korngrösse im Bereich von 0.08 - 0.25 mm in der Komponente A in einem Anteil von 60 bis 75 Gew.% vorliegt und aus Quarzsand besteht.

6. Mörtelzusammensetzung nach einem der Ansprüche 1 bis 5, dadurch gekennzeichnet, dass die Komponente A zusätzlich Feinsandzuschlag mit einer Korngrösse <0.05 mm enthält, z.B. Quarzmehl oder Marmormehl.

7. Mörtelzusammensetzung nach einem der Ansprüche 1 bis 6, dadurch gekennzeichnet, dass als Calciumhydroxid hydraulischer Kalk oder gelöschter Kalk verwendet wird.

8. Mörtelzusammensetzung nach einem der Ansprüche 1 bis 7, dadurch gekennzeichnet, dass die Komponente A 10 bis 25 Gew.%, vorzugsweise ca. 12 Gew.% Calciumhydroxid enthält.

9. Mörtelzusammensetzung nach einem der Ansprüche 1 bis 7, dadurch gekennzeichnet, dass die Komponente B 5 Gew.% Polyacrylat enthält.

10. Mörtelzusammensetzung nach einem der Ansprüche 1 bis 9, dadurch gekennzeichnet, dass die beiden Komponenten A und B in separaten Behältern vorgelegt werden, derart, dass sie unmittelbar vor ihrem Gebrauch in einem solchen Verhältnis gemischt werden können, dass ein Mörtel in der gewünschten Konsistenz erhalten wird.

11. Verfahren zur Reparatur eines Bauwerkes unter Verwendung einer Mörtelzusammensetzung nach einem der Ansprüche 1 bis 9, dadurch gekennzeichnet, dass
- die gereinigte zu reparierende Stelle mit einem Mörtel mit einer flüssigen streichfähigen Konsistenz, der aus den Komponenten A und B hergestellt ist, vorbehandelt wird, derart, dass der flüssige Mörtel aufgesogen wird, wobei nach dem Trocknen ein Haftgrund gebildet wird,
- aus den Komponenten A und B ein Mörtel mit einer möglichst steifen Konsistenz gemischt wird und
- dieser, je nach der Dicke des Auftrages, mindestens einmal mit einer Schichtstärke von höchstens 30 mm aufgetragen wird.

12. Verfahren nach Anspruch 11. dadurch gekennzeichnet, dass pro Auftrag eine Schichtstärke von 20 bis 25 mm aufgetragen wird.
